# EUROPÄISCHE PATENTSCHRIFT

(11) **EP 0 980 813 B1**
(45) Veröffentlichungstag und Bekanntmachung des Hinweises auf die Patenterteilung: **30.03.2005**
(21) Anmeldenummer: 99114464.3
(22) Anmeldetag: 23.07.1999
(51) Int. Cl.: B62D 6/00, B62D 1/28, B62D 15/02

(54) **Lenksystem in einem mit einer Spurfolgeeinrichtung ausgestatteten Fahrzeug**
Steerings system in a vehicle equipped with a track following mechanism
Système de direction pour un véhicule équipé avec un dispositif de suivi de piste

(30) Priorität: 18.08.1998 DE 19837340
(43) Veröffentlichungstag der Anmeldung: 23.02.2000
(73) Patentinhaber: DaimlerChrysler AG, 70567 Stuttgart (DE)
(72) Erfinder: Bohner, Hubert, 71032 Böblingen (DE); Moser, Martin, 70736 Fellbach (DE); Schrock, Wolfgang, 73732 Esslingen (DE)

(56) Entgegenhaltungen:
- DE-C- 4 422 386
- US-A- 5 285 867
- PATENT ABSTRACTS OF JAPAN vol. 016, no. 214 (M-1251), 20. Mai 1992 (1992-05-20) -& JP 04 038266 A (TOYOTA MOTOR CORP), 7. Februar 1992 (1992-02-07)

## Beschreibung

Die Erfindung betrifft ein Lenksystem in einem Fahrzeug, mit den Merkmalen des Oberbegriffes des Anspruches 1.

Eine herkömmliche Servolenkung weist eine Lenkhandhabe auf, beispielsweise ein Lenkhandrad, mit dessen Hilfe der Fahrer manuell eine Lenkkraft in das Lenksystem einleitet. Die Lenkhandhabe ist dabei mit einem mechanischen Lenkstrang verbunden, der die Lenkhandhabe mit lenkbaren Fahrzeugrädern koppelt. Eine Servolenkung verfügt außerdem über ein Servoventil, das üblicherweise im Lenkstrang angeordnet ist und ein eingangsseitiges erstes Steuerteil und ein ausgangsseitiges zweites Steuerteil aufweist. Das Servoventil trennt dabei im Lenkstrang einen lenkhandhabenseitigen Abschnitt, der mit dem eingangsseitigen, ersten Steuerteil gekoppelt ist, von einem fahrzeuglenkräderseitigen Abschnitt, der mit dem ausgangsseitigen, zweiten Steuerteil gekoppelt ist. Relativverstellungen, insbesondere Relativdrehungen, zwischen den Steuerteilen des Servoventils betätigen dann einen Servomotor, der mit dem fahrzeuglenkräderseitigen Abschnitt des Lenkstranges und damit mit den Fahrzeuglenkrädern gekoppelt ist. Bei einem hydraulisch arbeitenden Servomotor wird über das Servoventil der Servomotor in entsprechender Weise mit Hydraulikmitteldruck beaufschlagt.

Damit nicht beliebig kleine Lenkkräfte an der Lenkhandhabe zu einer Verstellung der Steuerteile im Servoventil und somit zu Lenkwinkelveränderungen an den Rädern führen, sind die Steuerteile des Servoventils über eine Federung, insbesondere über einen Torsionsstab oder eine C-Feder, miteinander gekoppelt, derart, daß die Federung die Steuerteile in eine Normallage vorspannt. Damit der Fahrer einen Lenkbefehl in das Lenksystem eingeben kann, muß er demnach manuell eine Lenkkraft aufbringen, die die Rückstellkraft der Federung im Servoventil überwindet. Diese Maßnahme dient insbesondere auch dazu, dem Fahrer ein Gefühl für die an den Fahrzeuglenkrädern herrschenden Kräfte zu vermitteln, um auf diese Weise die Fahrsicherheit zu erhöhen.

Moderne Fahrzeuge können mit einer Spurfolgeeinrichtung ausgestattet sein. Eine derartige Spurfolgeeinrichtung kann beispielsweise mittels einer entsprechenden Sensorik Lenkwinkel-Sollwerte generieren, die - wenn sie an den Fahrzeuglenkrädern eingestellt werden - es dem Fahrzeug ermöglichen, einer vorgegebenen Fahrspur zu folgen. Beispielsweise kann die Spurfolgeeinrichtung mit einer Kamera ausgestattet sein, die z.B. einen Fahrbahnseitenstreifen erfaßt und Lenkwinkel-Sollwerte in Abhängigkeit des Verlaufes dieses Seitenstreifens erzeugt.

Damit über die Spurfolgeeinrichtung das Fahrzeug den erforderlichen Lenkwinkel-Sollwert selbsttätig einstellen und einhalten kann, weist das Lenksystem bei einer derartigen Spurfolgeeinrichtung einen Stellantrieb auf, der mit dem lenkhandhabenseitigen Abschnitt des Lenkstranges gekoppelt ist und Lenkkräfte zum Einstellen des gewünschten Lenkwinkels in den Lenkstrang einleitet. Die vom Stellantrieb erzeugte mechanische Lenkkraft unterstützt oder ersetzt dabei die im Normalbetrieb vom Fahrer aufgebrachte manuelle Lenkkraft oder wirkt dieser sogar entgegen. Je nach der vom Fahrzeughersteller verfolgten Sicherheitsphilosophie kann der Fahrer im Spurfolgebetrieb sogar die Hände von der Lenkhandhabe nehmen.

Zur Regelung und Steuerung des Stellantriebes ist eine Regel- und Steueranordnung vorgesehen, die aus den von der Sensorik der Spurfolgeeinrichtung generierten Signalen einen Lenkwinkel-Sollwert ermittelt und mittels eines Lenkwinkelsensors einen Lenkwinkel-Istwert ermittelt. Die Regel- und Steueranordnung führt dann einen Vergleich der Soll- und Istwerte der Lenkwinkel durch und betätigt dementsprechend den Stellantrieb, um die zur Erzielung des gewünschten Lenkwinkels erforderliche Lenkkraft in das Lenksystem bzw. in den Lenkstrang einzuleiten.

Bei herkömmlichen Lenksystemen ist dabei der Lenkwinkelsensor, mit dem der Lenkwinkel-Istwert erfaßt wird, im lenkhandhabenseitigen Abschnitt des Lenkstranges angeordnet, d.h. bei einer hydraulischen Servolenkung zwischen Lenkhandhabe und hydraulischem Servoventil und bei einer elektrischen Servolenkung zwischen Lenkhandhabe und elektrischem Servoventil (z.B. ein elastischer Drehmomentsensor). Wenn jedoch zwischen den Steuerteilen des Servoventils eine Relativverstellung vorliegt, stimmt der an der Lenkhandhabe eingestellte Lenkwinkel nicht mit dem an den Fahrzeuglenkrädern herrschenden Lenkwinkel überein. Außerdem kann bei hydraulisch arbeitenden Servolenkungen im Servoventil und im lenkhandhabenseitigen Abschnitt des Lenkstranges und insbesondere in einem Getriebe, mit dem der Stellantrieb mit dem Lenkstrang gekoppelt ist, Reibung auftreten, die Störungen bei der Regelung der Radwinkelstellung bewirkt. Die genannten Abweichungen zwischen dem Lenkwinkel der Lenkhandhabe und dem Lenkwinkel der Fahrzeuglenkräder haben daher einen erhöhten Regelungsbedarf zur Folge, wodurch sich zum einen die Regelungszeit erhöht und zum anderen Schwingungen im Regelungssystem eher möglich sind. Um einer vorgegebenen Spur auch bei relativ hohen Fahrzeuggeschwindigkeiten folgen zu können, muß die Einstellung bzw. Einregelung der erforderlichen Lenkwinkel-Sollwerte jedoch möglichst exakt und schnell erfolgen. Die bekannten Lenksysteme können daher im Rahmen einer Spurfolgeeinrichtung nur bei relativ geringen Fahrzeuggeschwindigkeiten verwendet werden.

Aus der JP 04038266 A ist ein Lenksystem mit den Merkmalen des Oberbegriffs des Anspruchs 1 bekannt, das eine Einrichtung zum automatischen Lenken und Servounterstützung ausfweist. Der Lenkwinkel-Istwert wird nicht erfasst.

Ferner offenbart die US 5,285,867 ein Lenksystem mit Servounterstützung, bei dem die Lenkhandhabe und die gelenkten Fahrzeugräder hydraulisch gekoppelt sind. Über eine Regeleinrichtung und einen Motor kann auf den lenkhandhabenseitige Abschnitt des Lenkstranges ein Moment aufgebracht werden. Zur Regelung wird der Lenkwinkel-Istwert am Servomotor über einen Lenkwinkelsensor gemessen. Eine Spurfolgeeinrichtung ist nicht erwähnt. Die vorliegende Erfindung beschäftigt sich mit dem Problem, für ein Fahrzeug mit einer Spurfolgeeinrichtung ein Lenksystem der eingangs genannten Art dahingehend auszugestalten, daß die Spurfolgeeinrichtung auch bei höheren Fahrzeuggeschwindigkeiten verwendbar ist.

Dieses Problem wird erfindungsgemäß durch ein Lenksystem mit den Merkmalen des Anspruches 1 gelöst.

Die Erfindung beruht auf dem allgemeinen Gedanken, den Lenkwinkel-Istwert direkt an den Fahrzeuglenkrädern oder an einem Bauteil abzugreifen, das sich mit einem definierten Proportionalitätsfaktor oder in Abhängigkeit eines entsprechenden, parameterabhängigen Kennfeldes mit den Fahrzeuglenkrädern mitverstellt. Erfindungsgemäß wird dies dadurch erreicht, daß der den Lenkwinkel-Istwert erfassende Lenkwinkelsensor dem fahrzeuglenkräderseitigen Abschnitt des Lenkstranges zugeordnet ist. Verfälschungen des Lenkwinkel-Istwertes durch Abweichungen der Steuerteile von ihrer Normallage oder durch Reibung im Lenkventil oder im lenkhandhabenseitigen Abschnitt des Lenkstranges können dabei nicht auftreten. Ebenso werden Stöße von der Seite auf die gelenkten Fahrzeugräder, z.B. durch Schlaglöcher oder Spurrillen, unmittelbar als Winkeländerung erfaßt. Folglich kann die Einstellung des gewünschten Lenkwinkel-Sollwertes rasch und exakt durchgeführt werden. Das erfindungsgemäß ausgebildete Lenksystem ist daher für die Verwendung einer Spurfolgeeinrichtung auch bei höheren Fahrzeuggeschwindigkeiten geeignet.

Des Weiteren ist ein Druckmeßsensor vorgesehen, der zur Ermittlung eines Differenzdruckes zwischen zwei Motorleitungen dient, über die das Servoventil den Servomotor betätigt, wobei die Regel- und Steueranordnung bei der Einstellung des Lenkwinkel-Sollwertes den Differenzdruck berücksichtigt. Dadurch ist es möglich den gewünschten Lenkwinkel-Sollwert ohne ein Überschwingen der Regelung einzustellen, was weiter zur Verbesserung der Regelung beiträgt.

Weitere wichtige Merkmale und Vorteile des erfindungsgemäßen Lenksystems ergeben sich aus den Unteransprüchen.

Ein bevorzugtes Ausführungsbeispiel der Erfindung ist in der Zeichnung dargestellt und wird in der nachfolgenden Beschreibung näher erläutert.

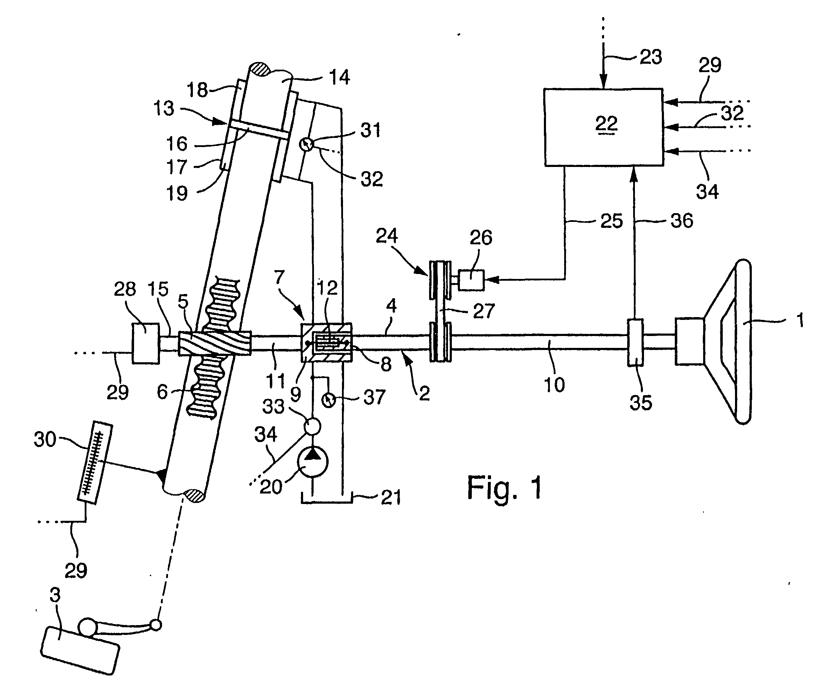

Fig. 1 zeigt eine schematische Prinzipdarstellung eines Lenksystems nach der Erfindung.

Entsprechend Fig. 1 weist ein Lenksystem nach der Erfindung eine als Lenkhandrad 1 ausgebildete Lenkhandhabe auf, die vom Fahrer des Fahrzeuges manuell betätigt wird. Die Lenkhandhabe 1 ist drehfest mit einem mechanischen Lenkstrang 2 verbunden, über den die Lenkhandhabe 1 mit lenkbaren Fahrzeugrädern 3 gekoppelt ist, von denen in Fig. 1 nur eines beispielhaft dargestellt ist. Der Lenkstrang 2 weist eine Lenkstange 4 auf, an deren einen Ende das Lenkhandrad 1 angebracht ist und an deren anderen Ende ein Ritzel 5 angebracht ist, das mit einer Zahnstange 6 kämmt, die ihrerseits mit den Fahrzeuglenkrädern 3 gekoppelt ist. In der Lenkstange 4 des Lenkstranges 2 ist ein als Drehschieberventil ausgebildetes Servoventil 7 angeordnet, das ein erstes Steuerteil 8 und ein zweites Steuerteil 9 aufweist, die gegeneinander drehbeweglich gelagert sind. Das der Eingangsseite des Servoventils 7 zugeordnete erste Steuerteil 8 ist drehfest mit einem lenkhandhabenseitigen, d.h. einem der Lenkhandhabe zugeordneten, Abschnitt 10 der Lenkstange 4 bzw. des Lenkstranges 2 verbunden. Im Unterschied dazu ist das der Ausgangsseite des Servoventils 7 zugeordnete zweite Steuerteil 9 drehfest mit einem fahrzeuglenkräderseitigen, d.h. einem den Fahrzeuglenkrädern 3 zugeordneten, Abschnitt 11 der Lenkstange 4 bzw. des Lenkstranges 2 drehfest verbunden. Auf diese Weise unterteilt das Servoventil 7 den Lenkstrang 2 bzw. die Lenkstange 4 in den lenkhandhabenseitigen Abschnitt 10 und den fahrzeuglenkräderseitigen Abschnitt 11.

Die Steuerteile 8 und 9 des Servoventils 7 sind jeweils drehfest mit einem Torsionsstab 12 verbunden, der diese in eine Normallage zueinander zu verstellen vermag. Bei von dieser Normallage abweichenden Relativverdrehungen zwischen den Steuerteilen 8 und 9 wird ein hydraulisch mit dem Steuerventil 7 gekoppelter hydraulischer Servomotor 13 betätigt. Dieser als Kolben-Zylinder-Aggregat ausgebildeter Servomotor 13 ist dabei über eine Kolbenstange 14 direkt mit der Zahnstange 6 verbunden. Auf der Kolbenstange 14 ist ein Kolben 16 angeordnet, der in einem Zylinder 17 eine erste Kammer 18 von einer zweiten Kammer 19 axial trennt.

Durch eine mehr oder weniger starke Drehverstellung zwischen den Steuerteilen 8 und 9 des Servoventils 7 wird die Druckseite einer Hydraulikmittelpumpe 20, deren Saugseite mit einem Hydraulikmittelreservoir 21 kommuniziert, mit der einen oder anderen Kammern 18 oder 19 des Servomotors 13 mehr oder weniger verbunden, während die jeweils andere Kammer 18 bzw. 19 über das Servoventil 7 an das Hydraulikmittelreservoir 21 angeschlossen ist. Je nach der in den Kammern 18 oder 19 herrschenden Druckdifferenz wird die Kolbenstange 14 und somit die Zahnstange 6 in der einen oder anderen Richtung verstellt, wodurch sich eine entsprechende Lenkwinkeländerung an den Fahrzeuglenkrädern 3 ergibt.

Das dargestellte Lenksystem weist außerdem eine Steuer- und Regelanordnung 22 einer Spurfolgeeinrichtung auf. Über einen Eingang 23 erhält diese Regel- und Steueranordnung 22 Informationen über eine einzuhaltende Fahrspur. Aus diesen Informationen ermittelt die Steuer- und Regelanordnung 22 Lenkwinkel-Sollwerte, die an den Fahrzeuglenkrädern 3 eingestellt werden müssen, damit das Fahrzeug der gewünschten Fahrspur folgen kann. Mit Hilfe von Lenkwinkel-Istwerten führt die Steuer- und Regelanordnung 22 Soll-Ist-Wert-Vergleiche durch, und ermittelt daraus Steuergrößen für einen Stellantrieb 24, die sie diesem über eine entsprechende Steuerleitung 25 mitteilt.

Der Stellantrieb 24 weist beispielsweise einen Elektromotor 26 auf, der über ein Getriebe 27 mit dem lenkhandhabenseitigen Abschnitt 10 des Lenkstranges 2 gekoppelt ist und dort eine mechanische Lenkkraft einleiten kann. Bei aktivierter Spurfolgeeinrichtung erzeugt der Stellantrieb 24 eine Lenkkraft im lenkhandhabenseitigen Abschnitt 10 des Lenkstranges 2 und bewirkt dadurch eine Relativverstellung zwischen den Steuerteilen 8 und 9 des Steuerventiles 7. Dies hat eine entsprechende Betätigung des Servomotors 13 zur Folge und bewirkt schließlich die erwünschte Lenkwinkeleinstellung an den Fahrzeuglenkrädern 3. Dabei kann der Stellantrieb 14 manuelle Lenkbetätigungen durch den Fahrer über die Lenkhandhabe 1 entweder lediglich unterstützen oder aber diese vollständig ersetzen.

Entsprechend einer ersten Ausführungsform ist zur Bestimmung des aktuellen Lenkwinkel-Istwertes ein Winkelmeßsensor 28 vorgesehen, der drehfest mit einem der Ausgangsseite des Servoventils 7 bzw. dem zweiten Steuerteil 9 zugeordneten Teil 15 der Lenkstange 4 drehfest verbunden ist. Auf diese Weise korreliert ein vom Winkelmeßsensor 28 generiertes Winkelmeßsignal mit dem an den Fahrzeuglenkrädern 3 herrschenden Lenkwinkel. Der mit dem Lenkwinkel-Istwert korrelierende Signalwert wird über eine entsprechende Signalleitung 29 der Regel- und Steueranordnung 22 zugeführt.

Entsprechend einer zweiten Ausführungsform ist zur Ermittlung des Istlenkwinkels ein Wegmeßsensor 30 vorgesehen, der mit der Zahnstange 6 bzw. mit der Kolbenstange 14 gekoppelt ist und deren Verstellweg erfaßt. Auch dieser Wegmeßsensor 30 generiert einen mit dem Istlenkwinkel der Fahrzeuglenkräder 3 korrelierenden Signalwert, der über eine entsprechende Signalleitung 29 der Regel- und Steueranordnung 22 zugeführt wird.

Durch die erfindungsgemäß gewählte Anordnung des Lenkwinkelsensors (Winkelmeßsensor 28 bzw. Wegmeßsensor 30) im fahrzeuglenkräderseitigen Abschnitt 11 des Lenkstranges 2 entspricht der von den Sensoren 28 bzw. 30 erfaßte Lenkwinkel ohne Verzerrungen dem an den Fahrzeuglenkrädern 3 herrschenden Lenkwinkel. Denn die Bauteile (Zahnstange 6 bzw. Lenkstange 4), an denen der Istlenkwinkel abgegriffen wird, sind derart mit den Fahrzeuglenkrädern 3 mechanisch zwangsgekoppelt, daß die Verstellbewegungen dieser Bauteile (4 bzw. 6) analog zu den Verstellbewegungen der Fahrzeuglenkräder 3 erfolgen, wobei ein definierter Proportionalitätsfaktor vorliegt.

Die Erfassung des Istlenkwinkels der Fahrzeuglenkräder 3 ist bei der erfindungsgemäßen Anordnung des Lenkwinkelsensors 28 bzw. 30 insoweit von der gegebenenfalls abweichenden aktuellen Stellung der Lenkhandhabe 1 entkoppelt. Die Einstellung bzw. Einregelung eines gewünschten Lenkwinkel-Sollwertes kann daher besonders genau und rasch durchgeführt werden. Folglich eignet sich das erfindungsgemäße Lenksystem insbesondere für den Betrieb einer Spurfolgeeinrichtung bei hohen Fahrzeuggeschwindigkeiten.

Beim erfindungsgemäßen Lenksystem kann die Steuer- und Regelanordnung 22 zusätzliche Parameter bei der Betätigung des Stellantriebes 24 berücksichtigen. Erfindungsgemäß ermittelt die Steuer- und Regelanordnung 22 mit Hilfe eines Drucksensors 31 den Differenzdruck zwischen den Kammern 18 und 19 des Servomotors 13 die Steuer- und Regelanordung 22, wobei einen damit korrelierenden Signalwert über eine Signalleitung 32 erhält. Der Steuerbefehl für die Einstellung des erwünschten Lenkwinkel-Sollwertes kann dann an die im Servomotor 13 herrschenden Druckverhältnisse angepaßt werden, wodurch der gewünschte Sollenkwinkel insbesondere ohne ein Überschwingen der Regelung erzielt werden kann.

Entsprechend einer anderen vorteilhaften Ausführungsform kann außerdem die sich in Abhängigkeit der Temperatur ändernde Viskosität des Hydraulikmediums berücksichtigt werden. Beispielsweise ist auf der Druckseite der Hydraulikmittelpumpe 20 ein Temperaturmeßsensor 33 angeschlossen, der die Temperatur des Hydraulikmittels mißt und einen damit korrelierenden Signalwert über eine Signalleitung 34 der Regel- und Steueranordnung 22 mitteilt. Um bei unterschiedlichen Hydraulikmitteltemperaturen gleich schnelle Verstellbewegungen für die Kolbenstange 14 des Servomotors 13 und somit exakte hochdynamische Verstellbewegungen für die Fahrzeuglenkräder 3 gewährleisten zu können, können die Relativverstellungen zwischen den Steuerteilen 8 und 9 des Servoventils 7 an die sich in Abhängigkeit der Hydraulikmitteltemperatur ändernde Viskosität des Hydraulikmittels angepaßt werden.

Bei einer Weiterbildung des Lenksystems ist ein zweiter Lenkwinkelsensor 35 am lenkhandhabenseitigen Abschnitt 10 angeordnet, der über eine Signalleitung 36 mit der Regel- und Steuerschaltung 22 verbunden ist und den Lenkwinkel des Lenkhandrades 1 erfaßt. Ein Vergleich der Werte des zweiten Lenkwinkelsensors 35 und des ersten Lenkwinkelsensors 28 bzw. 30 ermöglicht die exakte Bestimmung der Auslenkung der Steuerteile 8 und 9 des Servoventils 7. Zum einen kann dadurch die Regelung des Servoventils 7 verbessert werden. Zum anderen kann das am Servoventil 7 anstehende bzw. das im Lenkstrang 2 herrschende Drehmoment ermittelt bzw. überprüft werden.

Außerdem kann an die Druckseite der Hydraulikmittelpumpe 20 ein Drucksensor 37 angeschlossen sein, dessen Meßsignale der Steuer- und Regelanordnung 22 übermittelt werden. Dann kann in Abhängigkeit dieses Hydraulikdruckes die Steuerung bzw. Regelung des Servomotors 13 beeinflußt werden.

## Patentansprüche

1. Lenksystem in einem mit einer Spurfolgeeinrichtung ausgestatteten Fahrzeug, umfassend
- eine Lenkhandhabe (1), z.B. ein Lenkhandrad, zur Einleitung einer manuellen Lenkkraft in das Lenksystem,
- einen mechanischen Lenkstrang (2), der die Lenkhandhabe (1) mechanisch mit lenkbaren Fahrzeugrädern (3) koppelt,
- einen Servomotor (13), der zur Lenkbetätigung der Fahrzeuglenkräder (3) mit dem Lenkstrang (2) gekoppelt ist,
- ein Servoventil (7), das im Lenkstrang (2) angeordnet ist und ein erstes Steuerteil (8), das einem lenkhandhabenseitigen Abschnitt (10) des Lenkstranges (2) zugeordnet ist, sowie ein zweites Steuerteil (9) aufweist, das einem fahrzeuglenkräderseitigen Abschnitt (11) des Lenkstranges (2) zugeordnet ist, wobei das Servoventil (7) den Servomotor (13) in Abhängigkeit von Relativverstellungen zwischen den Steuerteilen (8,9) betätigt,
- einen Stellantrieb (24), der mit dem lenkhandhabenseitigen Abschnitt (10) des Lenkstranges (2) gekoppelt ist und zur Einleitung einer mechanischen Lenkkraft in das Lenksystem dient, und
- eine Regel- und Steueranordnung (22),
**dadurch gekennzeichnet**,
- daß die Regel- und Steueranordnung (22) mittels einer Sensorik einen Lenkwinkel-Sollwert ermittelt, der dem Fahrzeug das Folgen einer vorgegebenen Spur ermöglicht, mittels eines Lenkwinkelsensors (28;30) einen Lenkwinkel-Istwert ermittelt und in Abhängigkeit eines Vergleiches der Soll- und Ist-Werte der Lenkwinkel den Stellantrieb (24) zur Einleitung einer Lenkkraft betätigt,
- wobei der Lenkwinkelsensor (28;30) zur Erfassung des Lenkwinkel-Istwertes mit dem fahrzeuglenkräderseitigen Abschnitt (11) des Lenkstranges (2) zusammenwirkt, und
- daβ ein Druckmeßsensor (31) angeordnet ist, der zur Ermittlung eines Differenzdruckes zwischen zwei Motorleitungen dient, über die das Servoventil (7) den Servomotor (13) betätigt,
- wobei die Regel- und Steueranordnung (22) bei der Einstellung des Lenkwinkel-Sollwertes den Differenzdruck berücksichtigt.

2. Lenksystem nach Anspruch 1,
**dadurch gekennzeichnet,**
**daß** der Lenkwinkelsensor als Winkelmeßsensor (28) ausgebildet ist, der durch ein Element (15) des fahrzeuglenkräderseitigen Abschnittes (11) des Lenkstranges (2) betätigt ist, das sich bei Lenkwinkelverstellungen der Fahrzeuglenkräder (3) drehend verstellt.

3. Lenksystem nach Anspruch 1,
**dadurch gekennzeichnet,**
**daß** der Lenkwinkelsensor als Wegmeßsensor (30) ausgebildet ist, der durch ein Element (6) des fahrzeuglenkräderseitigen Abschnittes (11) des Lenkstranges (2) betätigt ist, das sich bei Lenkwinkelverstellungen der Fahrzeuglenkräder (3) im wesentlichen linear verstellt.

4. Lenksystem nach einem der Ansprüche 1 bis 3,
**dadurch gekennzeichnet,**
**daß** ein Druckmeßsensor (37) vorgesehen ist, der zur Ermittlung des Hydraulikdruckes einer Hydraulikmittelpumpe (20) dient, die zur Betätigung des Servomotors (13) das Servoventil (7) mit Hydraulikdruck versorgt, wobei der Hydraulikdruck von der Regel- und Steueranordnung (22) bei der Betätigung des Servomotors (13) berücksichtigt wird.

5. Lenksystem nach einem der Ansprüche 1 bis 4,
**dadurch gekennzeichnet,**
**daß** ein Temperaturmeßsensor (33) vorgesehen ist, der zur Ermittlung der Temperatur des Hydraulikmittels dient.

6. Lenksystem nach einem der Ansprüche 1 bis 5,
**dadurch gekennzeichnet,**
**daß** ein zweiter Lenkwinkelsensor (35) vorgesehen ist, der zur Ermittlung des Lenkwinkels der Lenkhandhabe (1) dient, wobei die Differenz der Lenkwinkelwerte des ersten Lenkwinkelsensors (28;30) und des zweiten Lenkwinkelsensors (35) zur Regelung des Stellantriebs (24) und/oder zur Ermittlung des im Lenkstrang (2) herrschenden Drehmomentes dient.

## Claims

1. A steering system in a vehicle fitted with a lane tracking device, comprising
- a steering control (1), for example a steering wheel, for introducing a manual steering force into the steering system,
- a mechanical steering train (2) which links the steering control (1) mechanically to steerable vehicle wheels (3),
- a servomotor (13) which is linked to the steering train (2) to actuate/steer the vehicle steering wheels,
- a servo valve (7) which is positioned in the steering train (2) and has a first control part (8) which is associated with a steering control-side section (10) of the steering train (2) and a second control part (9) which is associated with a steerable vehicle wheel-side section (11) of the steering train (2), the servo valve (7) actuating the servomotor (13) in accordance with relative movements of the control parts (8, 9) in relation to one another,
- an actuator (24) which is linked to the steering control-side section (10) of the steering train (2) and serves to introduce a mechanical steering force into the steering system, and
- an automatic control arrangement (22),
**characterised in that**
- the automatic control arrangement (22) determines a reference steering angle value which enables the vehicle to follow a predetermined lane using a sensory mechanism, detects an actual steering angle value using a steering angle sensor (28; 30) and actuates the actuator to introduce a steering force dependent on a comparison of the reference and actual values of the steering angle,
- the steering angle sensor (28; 30) co-operating with the steerable vehicle wheel-side section (11) of the steering train (2) in order to measure the actual steering angle value, and
- a pressure measurement sensor (31) is provided which serves to determine a pressure differential between two engine lines via which the servo valve (7) actuates the servomotor (13),
- the automatic control arrangement (22) taking into account the pressure differential when setting the reference steering angle value.

2. A steering system in accordance with claim 1,
**characterised in that**
the steering angle sensor is designed as an angle measurement sensor (28) which is actuated by an element (15) of the steerable vehicle wheel-side section (11) of the steering train (2) and which moves rotationally in the case of steering angle movements of the steerable vehicle wheels (3).

3. A steering system in accordance with claim 1,
**characterised in that**
the steering angle sensor is designed as a travel measurement sensor (30) which is actuated by an element (6) of the steerable vehicle wheel-side section (11) of the steering train (2) and which carries out an essentially linear adjustment in the case of steering angle adjustments of the steerable vehicle wheels (3).

4. A steering system in accordance with one of claims 1 to 3,
**characterised in that**
a pressure measurement sensor (37) is provided which serves to determine the hydraulic pressure of a hydraulic fluid pump (20) which supplies the servo valve (7) with hydraulic pressure in order to actuate the servomotor (13), the hydraulic pressure being taken into account by the automatic control arrangement (22) in the actuation of the servomotor (13).

5. A steering system in accordance with one of claims 1 to 4,
**characterised in that**
a temperature measurement sensor (35) is provided which serves to determine the temperature of the hydraulic fluid.

6. A steering system in accordance with one of claims 1 to 5,
**characterised in that**
a second the steering angle sensor (35) is provided which serves to determine the steering angle of the steering control (1), the difference between the steering angle values of the first steering angle sensor (28; 30) and the second steering angle sensor (35) serving to control the actuator (24) and/or to determine the torque prevailing in the steering train (2).

## Revendications

1. Système de direction dans un véhicule équipé d'un dispositif de suivi de piste, comprenant :
- une prise de direction (1), par ex. un volant, pour introduire une force de direction manuelle dans le système de direction,
- une colonne de direction mécanique (2) qui couple la prise de direction (1) mécaniquement à des roues dirigeables du véhicule (3),
- un servomoteur (13) qui est couplé à la colonne de direction (2) pour diriger les roues de direction du véhicule (3),
- une servosoupape (7), qui est disposée dans la colonne de direction (2) et comporte un premier élément de commande (8), qui est affecté à un tronçon côté prise de direction (10) de la colonne de direction (2), ainsi qu'un deuxième élément de commande (9) affecté à un tronçon côté roues de direction du véhicule (11) de la colonne de direction (2), la servosoupape (7) actionnant le servomoteur (13) en fonction de déplacements relatifs entre les éléments de commande (8, 9),
- un mécanisme de commande (24), qui est couplé au tronçon côté prise de direction (10) de la colonne de direction (2) et sert à introduire une force de direction mécanique dans le système de direction et
- un dispositif de réglage et de commande (22)
**caractérisé en ce**
**que** le dispositif de réglage et de commande (22) détermine au moyen d'une technologie de capteurs une valeur de consigne d'angle de braquage qui permet au véhicule de suivre une piste prescrite, détermine au moyen d'un capteur d'angle de braquage (28, 30) une valeur effective d'angle de braquage et actionne le mécanisme de commande (24) en fonction d'une comparaison des valeurs de consigne et effective des angles de braquage pour introduire une force de direction,
- le capteur d'angle de braquage (28, 30) agissant avec le tronçon côté roues de direction du véhicule (11) de la colonne de direction (2) pour saisir la valeur effective de l'angle de braquage et
- en ce qu'un capteur de pression (31), qui sert à déterminer une pression différentielle entre deux conduites de moteur par le biais desquelles la servosoupape (7) actionne le servomoteur (13), est disposé,
- la pression différentielle étant prise en compte par le dispositif de réglage et de commande (22) lors du réglage de la valeur de consigne de l'angle de braquage.

2. Système de direction selon la revendication 1, **caractérisé en ce que** le capteur d'angle de braquage est réalisé comme capteur de mesure d'angle (28), qui est actionné par un élément (15) du tronçon côté roues de direction du véhicule (11) de la colonne de direction (2), qui se déplace par rotation en cas de modifications des angles de braquage des roues de direction du véhicule (3).

3. Système de direction selon la revendication 1, **caractérisé en ce que** le capteur d'angle de braquage est réalisé comme capteur de mesure de déplacement (30), qui est actionné par un élément (6) du tronçon côté roues de direction du véhicule (11) de la colonne de direction (2) qui se déplace essentiellement de manière linéaire lors de modifications de l'angle de braquage des roues de direction du véhicule (3).

4. Système de direction selon une des revendications 1 à 3, **caractérisé en ce qu'**un capteur de mesure de pression (37) servant à déterminer la pression hydraulique d'une pompe de fluide hydraulique (20) qui alimente la servosoupape (7) en pression hydraulique pour actionner le servomoteur (13) est prévu, la pression hydraulique étant prise en compte par le dispositif de réglage et de commande (22) lors de l'actionnement du servomoteur (13).

5. Système de direction selon une des revendications 1 à 4, **caractérisé en ce qu'**un capteur de mesure de température (33) qui sert à déterminer la température du fluide hydraulique est prévu.

6. Système de direction selon une des revendications 1 à 5, **caractérisé en ce qu'**un deuxième capteur d'angle de braquage (35) qui sert à déterminer l'angle de braquage de la prise de direction (1) est prévu, la différence entre les valeurs d'angle de braquage du premier capteur d'angle de braquage (28, 30) et du deuxième capteur d'angle de braquage (35) servant à réguler le mécanisme de commande (24) et/ou à déterminer le couple de rotation qui règne dans la colonne de direction (2).
